(19) Europäisches Patentamt

European Patent Office

Office européen des brevets

(11) **EP 1 679 899 A1**

(12) **DEMANDE DE BREVET EUROPEEN**

(43) Date de publication:
**12.07.2006 Bulletin 2006/28**

(51) Int Cl.:
***H04N 7/26*** (2006.01)

(21) Numéro de dépôt: **05292765.4**

(22) Date de dépôt: **21.12.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **10.01.2005 FR 0500212**

(71) Demandeur: **STMicroelectronics SA**
**92120 Montrouge (FR)**

(72) Inventeurs:
• **Lebowsky, Fritz**
  **38410 Saint Martin d'Uriage (FR)**
• **Nicolas, Marina**
  **38340 Voreppe (FR)**

(74) Mandataire: **Zapalowicz, Francis**
**Bureau Casalonga & Josse**
**Bayerstrasse 71/73**
**80335 München (DE)**

(54) **Procédé et dispositif de réduction des artefacts d'une image numérique**

(57)    Procédé de réduction des artéfacts d'une image numérique incidente (INI) comportant des pixels véhiculant des informations. Il comprend la détermination pour certains pixels considérés de l'image de pixels décalés, un pixel décalé associé à un pixel considéré étant situé à un emplacement décalé par rapport à l'emplacement dudit pixel considéré, la détermination d'une information de substitution ($\alpha$) prenant en compte les variations entre chaque information véhiculée par des pixels situés à des emplacements adjacents dudit pixel considéré, et le remplacement ou non dudit pixel considéré par un pixel de substitution égal au pixel décalé ou à une combinaison du pixel décalé et du pixel considéré, en fonction de la valeur de ladite information de substitution ($\alpha$).

# FIG.4

EP 1 679 899 A1

**Description**

L'invention concerne le traitement d'images numériques, en particulier le post-traitement des images numériques ayant été comprimées à l'aide d'une norme de compression nécessitant la division de l'image en plusieurs blocs, comme par exemple la norme MPEG.

L'invention s'applique avantageusement mais non limitativement à des applications de vidéo numériques utilisant des écrans de grande dimension, tels que les écrans Plasma.

Pour transmettre ou stocker des images numériques dans le cadre d'applications vidéo numériques, il est nécessaire de comprimer l'image à l'aide d'une norme de compression. De façon à faciliter la phase de compression on convertit la source de pixels en coefficients à l'aide d'un algorithme de transformation, comme par exemple la Transformée Cosinus Discrète (DCT) utilisée classiquement sur des blocs de dimension 8*8. Pour que la transmission ou le stockage de l'image soit optimal, les facteurs de compression peuvent être très élevés, ce qui implique des artefacts de compression peu visibles sur des écrans de résolution standards mais significatifs sur des écrans de grandes dimensions et à haute résolution.

Visuellement les artefacts de compression se traduisent par l'apparition d'un effet de bord liés aux blocs élaborés lors de la phase de transformation, ainsi que par la présence de bruits engendrés par des oscillations transitoires (« ringing » ou « mosquito noise » en langue anglaise).

En outre, sans traitement adéquat pour réduire ces artefacts, l'utilisation de décodeurs usuels entraîne la perte de fidélité de certaines couleurs.

L'invention vise à apporter une solution à ces problèmes.

À cet effet, l'invention propose selon un mode de mise en oeuvre un procédé de réduction des artefacts d'une image numérique incidente comportant des pixels véhiculant des informations.

Ces informations peuvent par exemple correspondre aux trois octets pour chacune des composantes des formats de stockage Rouge-Vert-Bleu (RGB), Luminance-Couleur Rouge-Couleur Bleue (YCrCb) ou Luminance-Teinte-Saturation (HSL pour « Hue-Luminance-Saturation » en langue anglaise).

Selon une caractéristique générale de ce mode de mise en oeuvre de l'invention, le procédé comprend

- la détermination pour certains pixels considérés de l'image de pixels décalés, un pixel décalé associé à un pixel considéré étant situé à un emplacement décalé par rapport à l'emplacement dudit pixel considéré,
- la détermination d'une information de substitution prenant en compte les variations entre chaque information véhiculée par des pixels situées à des emplacements adjacents dudit pixel considéré, et
- le remplacement ou non dudit pixel considéré par un pixel de substitution égal au pixel décalé ou à une combinaison du pixel décalé et du pixel considéré, en fonction de la valeur de ladite information de substitution.

En d'autres termes, on substitue certains pixels de l'image incidente par des pixels dits décalés, c'est-à-dire un pixel appartenant à l'image incidente autre que le pixel initialement situé à cet emplacement. La substitution s'effectue si l'information de substitution remplit certaines conditions, qui est par exemple que la zone voisine du pixel susceptible d'être remplacé par un pixel décalé soit visuellement homogène. En effet, si cette zone de voisinage est visuellement homogène, la substitution du pixel original par un pixel décalé ne sera pas visible lors de l'affichage de l'image.

Ce procédé a pour avantage de réduire fortement les artéfacts et notamment les effets dit de « blocs » en cassant les structures de blocs créées lors de la phase de compression pour le transfert ou le stockage de l'image.

Par ailleurs, l'examen du remplacement éventuel du pixel considéré comprend avantageusement la comparaison de ladite information de substitution à un premier et deuxième seuils. En outre, on conserve de préférence le pixel considéré si l'information de substitution est supérieure ou égal au premier seuil. Par contre, on remplace le pixel considéré par le pixel de substitution si l'information de substitution est inférieure au premier seuil, la nature du pixel de substitution dépendant alors du résultat de la comparaison entre l'information de substitution et le deuxième seuil.

Selon un mode de mise en oeuvre, le pixel de substitution est de préférence égal au pixel décalé si l'information de substitution est inférieure au deuxième seuil, et est égale à une somme pondérée du pixel considéré et du pixel décalé si l'information de substitution est supérieure au deuxième seuil.

Selon un mode de mise en oeuvre de l'invention, chaque emplacement décalé est décalé de l'emplacement correspondant du pixel considéré, d'un décalage correspondant à un déplacement selon deux axes orthogonaux de l'image, respectivement d'amplitudes n et m, au moins l'une des amplitudes m ou n étant non nulle.

Selon un mode de mise en oeuvre, la détermination de l'information de substitution relative à un pixel considéré peut comprendre avantageusement

un filtrage des informations véhiculées par les pixels situés aux emplacements adjacents du pixel considéré,
la sommation des informations filtrées.

De préférence, on détermine des pixels décalés pour un pixel sur deux de l'image incidente, et par le fait que la somme des amplitudes selon les deux axes orthogonaux du déplacement est paire.

Cette structure en damier est celle permettant de casser au maximum la structure du bloc.

L'invention propose également un mode de réalisation d'un dispositif de réduction des artefacts d'une image numérique incidente composés de pixels véhiculant des informations.

Selon une caractéristique générale de ce mode de réalisation, le dispositif comprend

- des moyens de détermination aptes à déterminer pour certains pixels considérés de l'image des pixels décalés, un pixel décalé associé à un pixel considéré étant situés à un emplacement décalé par rapport à l'emplacement dudit pixel considéré,
- des moyens de calcul aptes à déterminer une information de substitution en prenant en compte les variations entre chaque information véhiculée par des pixels situés à des emplacements adjacents dudit pixel considéré, et
- un moyen de substitution apte à remplacer ou non le pixel considéré par un pixel de substitution égal au pixel décalé ou à une combinaison du pixel décalé et du pixel considéré, en fonction de la valeur de ladite information de substitution.

Selon un mode de réalisation de l'invention, le dispositif comprend une mémoire apte à stocker les pixels de l'image incidente. En outre, les moyens de détermination peuvent comprendre des moyens d'adressage de ladite mémoire, aptes à délivrer une première adresse correspondant à l'emplacement du pixel considéré et une deuxième adresse correspondant à l'emplacement décalé du pixel décalé associé audit pixel considéré, de telle sorte que chaque emplacement décalé est décalé de l'emplacement correspondant du pixel considéré d'un décalage correspondant à un emplacement selon deux axes orthogonaux de l'image, respectivement d'amplitudes n et m, au moins l'une des amplitudes m ou n étant non nulle.

De préférence, l'ensemble des premières adresses peut correspondre à un pixel sur deux de l'image incidente, et la somme des amplitudes selon les deux axes orthogonaux du déplacement est paire.

Par ailleurs, selon un mode de réalisation de l'invention, les moyens d'adressage peuvent comprendre

- une première paire de compteurs affectés à un axe de l'image et mutuellement décalés en fonction dudit emplacement selon cet axe,
- une deuxième paire de compteurs affectés à l'autre axe de l'image et mutuellement décalés en fonction dudit déplacement selon cet autre axe,
- un premier multiplexeur dont les deux entrées sont connectées respectivement à la première paire de compteurs,
- un deuxième multiplexeur dont les deux entrées sont connectées respectivement à la deuxième paire de compteurs,
- un additionneur connecté aux sorties des deux multiplexeurs, et délivrant en sortie une adresse de pointage de la mémoire.

Selon un mode de réalisation de l'invention, les moyens de calcul du dispositif peuvent comprendre

- des moyens aptes à filtrer des informations véhiculées par les pixels situés aux emplacements adjacents du pixel considéré,
- des moyens de sommation aptes à sommer des informations de filtrage, lesdits moyens de sommation délivrant ladite information de substitution.

Selon un mode de réalisation de l'invention, le moyen de substitution comprend avantageusement

- des moyens de comparaison aptes à comparer l'information de substitution à un premier et à un deuxième seuils, et
- des moyens de mélange recevant le pixel de l'image incidente et le pixel décalé éventuel correspondant, et délivrant le pixel incident considéré ou le pixel de substitution de ce pixel incident en fonction du résultat des moyens de comparaison.

Par ailleurs, l'invention propose également un système format écran comprenant un écran, par exemple un écran Plasma, destiné à afficher une image numérique et un dispositif tel que défini ci-dessus.

D'autres avantages et caractéristiques de l'invention apparaîtront à l'examen de la description détaillée d'un mode de réalisation de l'invention nullement limitatif et des dessins annexés, sur lesquels :

- la figure 1 représente un mode de réalisation du dispositif selon l'invention ;
- la figure 2 représente un exemple de mise en oeuvre du procédé de réduction des artefacts selon l'invention ;
- la figure 3 représente un mode de réalisation d'une partie du dispositif selon l'invention ; et
- les figures 4 et 5 illustrent un exemple de formation de l'image numérique finale selon l'invention, en fonction de la valeur de l'information de substitution.

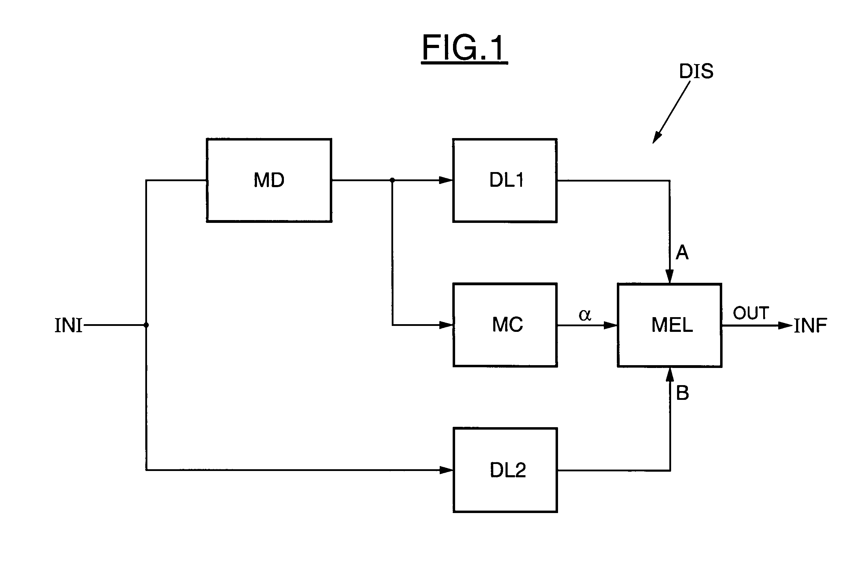

Sur la figure 1, on a représenté un mode de réalisation d'un dispositif DIS selon l'invention.

Le dispositif DIS représenté se situe en fin de chaîne de transmission d'une image numérique, de façon à effectuer un post-traitement numérique sur l'image qui a préalablement été comprimée, transmise, puis décomprimée par les différents modules de traitement de la chaîne de transmission (non représentés).

La référence INI désigne une image numérique incidente délivrée au dispositif DIS à l'issue de la phase de décompression. L'image INI est délivrée pixel par pixel à des moyens de détermination MD. Ces moyens de détermination MD vont permettre de déterminer pour certains pixels, par exemple un pixel sur deux, de l'image incidente, des pixels dits « décalés ».

Autrement dit, les moyens de détermination MD vont permettre de construire deux sous-images virtuelles, une première sous-image virtuelle étant formée d'une partie des pixels de l'image incidente, et une deuxième sous-image virtuelle étant formée des pixels complémentaires de la première sous-image virtuelle décalée d'un déplacement donné.

Ce déplacement peut correspondre par exemple à une translation selon les axes orthogonaux de l'image, respectivement d'amplitudes n et m, dont la somme n+m est paire et non nulle. Un mode de fonctionnement précis des moyens de détermination MD sera détaillé ci-après.

Les pixels des deux sous-images virtuelles sont délivrés respectivement à un bloc de retard DL1 et à des moyens de calcul MC connectés en sortie des moyens de détermination MD.

Parallèlement au bloc de retard DL1, le dispositif DIS comprend également un deuxième bloc de retard DL2 recevant en entrée pixel par pixel, les pixels de l'image numérique incidente INI.

Les blocs de retard DL1 et DL2 sont dans cet exemple utilisés pour pouvoir effectuer le décalage des pixels devant être décalés, ainsi que la synchronisation de la sortie.

Les moyens de calcul MC ont pour but de détecter si la zone des pixels adjacents au pixel considéré dans l'image incidente est suffisamment uniforme pour autoriser la substitution du pixel considéré. Pour cela, les moyens de calcul peuvent par exemple utiliser un filtre de type gradient tel que :

$$Gradout = Abs \begin{pmatrix} 1 & -1 & 1 \\ -1 & 0 & -1 \\ 1 & -1 & 1 \end{pmatrix}_r + Abs \begin{pmatrix} 1 & -1 & 1 \\ -1 & 0 & -1 \\ 1 & -1 & 1 \end{pmatrix}_g + Abs \begin{pmatrix} 1 & -1 & 1 \\ -1 & 0 & -1 \\ 1 & -1 & 1 \end{pmatrix}_b$$

Plus précisément, si l'on considère un pixel de coordonnées (x, y), la contribution de la composante rouge dans la valeur de Gradout est :

$$Abs(pixel\ (x,y))_r = valeur\ absolue\ (in(x-1,y-1)-in(x,y-1)+in(x+1,y-1)-in(x-1,y)-in(x+1,y)+in(x-1,y+1)-in(x,y+1)+in(x+1,y+1))$$

où in(x,y) représente la valeur de la composante rouge du pixel de coordonnées (x,y).

Dans l'exemple cité, un poids nul est affecté au pixel central du filtre qui est le pixel considéré, de façon à étudier les variations dans la zone environnant ce pixel, en évitant les multiplications dans le calcul.

La zone est considérée comme suffisamment uniforme si la somme Abs(pixel (x,y)) des coefficients au niveau de chaque filtre pour chaque composante RGB est proche de zéro.

Bien entendu, d'autres filtres numériques peuvent être utilisés pour analyser l'uniformité de la zone entourant le pixel considéré.

Les moyens de calcul MC délivrent donc en sortie une valeur $\alpha$ correspondant à la valeur délivrée par le filtre gradient Gradout normalisée, autrement dit $\alpha = Gradout*norme$ où la valeur de la norme *norme* dépend des filtres utilisés dans les moyens de calcul.

Ainsi, $\alpha$ est un facteur variant de 0 à 1. Ses variations seront décrites plus en détail ci-après.

Les valeurs fournies par les différents blocs DL1, MC et DL2, respectivement A, $\alpha$ et B, sont délivrées à un mélangeur MEL dont le but est de délivrer un pixel constitutif de l'image numérique finale INF en fonction de l'information de substitution $\alpha$.

L'information A reçue par le mélangeur MEL correspond à un pixel de l'image numérique incidente INI ou alors à un pixel décalé. L'information B correspond, quant à elle, à un pixel de l'image numérique incidente INI.

Dans le cas où l'information A correspond à un pixel de l'image numérique incidente INI, la sortie OUT du mélangeur MEL correspond systématiquement à un pixel initial de l'image incidente INI.

Dans le cas où l'information A correspond à un pixel décalé par les moyens de détermination MD, l'information OUT peut être égale à trois types de pixels différents selon la valeur prise par l'information de substitution $\alpha$ , à savoir le pixel considéré, le pixel décalé ou une somme pondérée par $\alpha$ de ces deux pixels. Il vient :

$$OUT = (1-\alpha)*A + \alpha*B$$

Les conditions de substitution du pixel considéré de l'image numérique incidente INI seront décrites plus en détail ci-après.

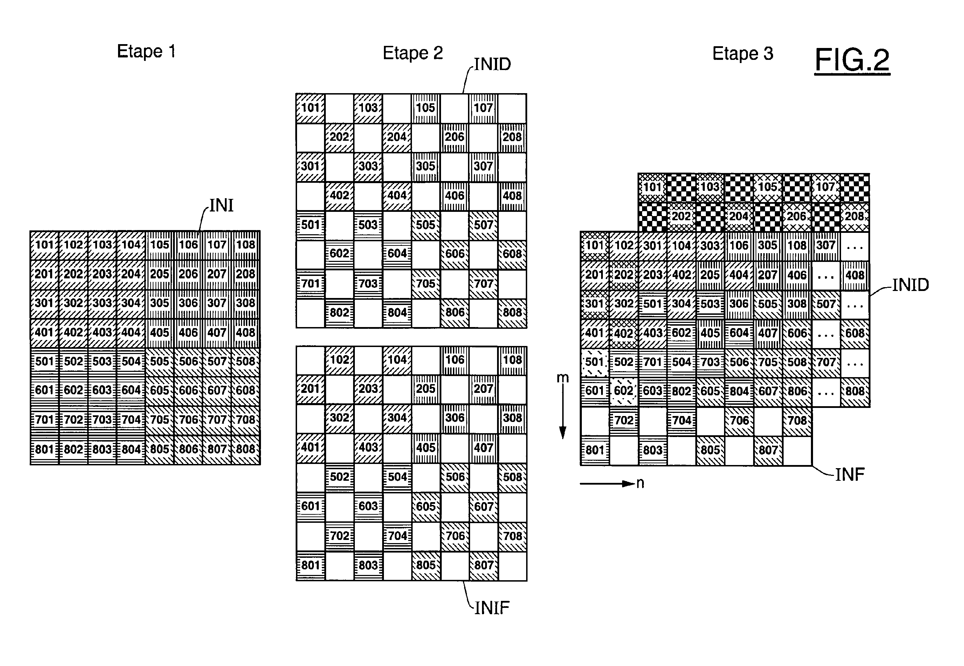

On se réfère à présent à la figure 2, qui illustre plus en détail la détermination pour certains pixels considérés de l'image, des pixels décalés.

On considère, lors d'une première étape, l'image numérique incidente INI, comprenant dans cet exemple 8 lignes et 8 colonnes de pixels numérotées de 1 à 8 pour les colonnes et de 100 à 800 pour les lignes. La référence INI pourrait également représenté un bloc 8*8 extrait d'une image incidente.

Pour cet exemple, l'image numérique incidente INI comprend quatre zones distinctes représentées par quatre trames différentes.

Lors d'une deuxième étape, on élabore deux sous-images virtuelles INIF et INID. La première sous-image virtuelle INIF comprend un pixel sur deux de l'image numérique incidente INI. La deuxième sous-image virtuelle INID est une sous-image complémentaire de la première sous-image INIF. En outre, chacun des pixels de la deuxième sous-image virtuelle INID est décalé d'un décalage donné par rapport à son emplacement dans l'image incidente. Ce décalage consiste dans cet exemple à incrémenter les abscisses de chaque pixel de n=2 et les ordonnées de chaque pixel de m=200.

Durant une troisième étape, on reconstitue l'image numérique finale INF en associant en fonction de la valeur de l'information de substitution $\alpha$, les deux sous-images INIF et INID.

Ainsi, l'image numérique finale INIF comprend la première sous-image virtuelle INIF, puis, pour chaque pixel manquant de la première sous-image INIF, un pixel de substitution appartenant soit à la deuxième sous-image décalée INID, soit à l'image numérique initiale si la substitution n'a pas été autorisée par l'information de substitution $\alpha$. Ainsi, par exemple, l'image numérique finale INIF comprend le pixel numéro 102 initial, puis à la place du pixel 103 initial le pixel 301 de la deuxième sous-image virtuelle décalée INID qui se trouve à la place du pixel 103 après le décalage de la deuxième sous-image INID.

Pour les pixels se trouvant sur les bords de l'image numérique finale INF, étant donné que l'on ne peut effectuer de substitution avec des pixels appartenant à la deuxième sous-image virtuelle décalée INID, on complète les pixels manquants de l'image numérique finale INF par les pixels initiaux de l'image numérique incidente INI. Ainsi, on conserve par exemple le pixel 101 dans l'image numérique finale INF.

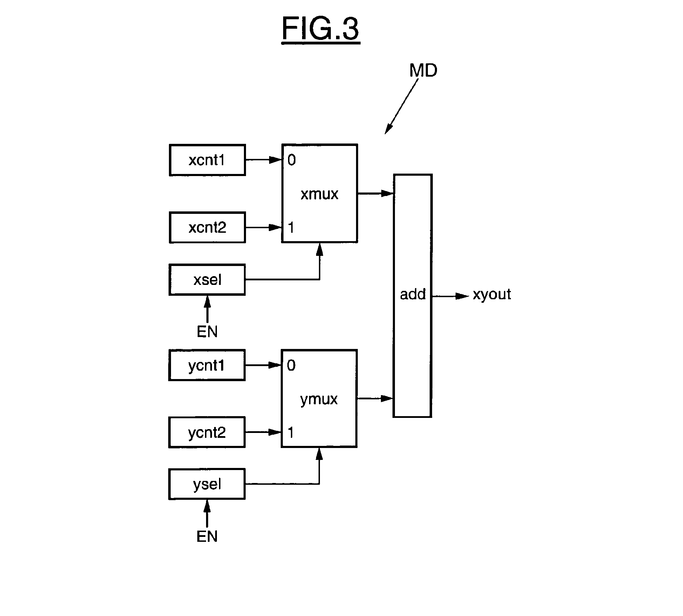

On se réfère à présent à la figure 3, qui représente un mode de réalisation des moyens de détermination.

Pour délivrer successivement les pixels appartenant à la première sous-image virtuelle et à la deuxième sous-image virtuelle, les moyens de détermination cadencés par une horloge (non représentée) comprennent deux multiplexeurs xmux et ymux, chacun étant affecté à un axe de l'image, respectivement l'axe des abscisses et l'axe des ordonnées.

Les sorties des multiplexeurs xmux et ymux sont connectées à un additionneur add, qui délivre en sortie l'adresse xyout, correspondant au numéro du pixel délivré par l'information A au mélangeur MEL.

Les entrées du premier multiplexeur xmux sont respectivement connectées à une paire de compteurs xcnt1 et xcnt2, le deuxième compteur xcnt2 étant décalé par rapport au premier compteur xcnt1, du déplacement selon l'axe des abscisses, égal à 2 dans cet exemple.

Le premier pointeur xmux reçoit également en entrée une variable de commande xsel, prenant alternativement les valeurs « 0 » et « 1 » de façon à connecter la sortie du multiplexeur xmux à l'une ou l'autre de ses entrées.

Dans le cas où l'on traite la bordure de l'image, une variable EN contrôlant la valeur de xsel prend la valeur « 0 », forçant la valeur de xsel à « 0 ». Le multiplexeur xmux délivre alors la valeur reçue sur sa première entrée, de manière à former l'adresse d'un pixel appartenant à l'image initiale.

De même que pour le premier multiplexeur, les entrées du deuxième multiplexeur ymux sont respectivement connectées à une deuxième paire de compteurs ycnt1 et ycnt2, le deuxième compteur ycnt2 étant décalé par rapport au premier compteur ycntl, du déplacement selon l'axe des ordonnées, égal à 200 dans cet exemple.

Le deuxième multiplexeur ymux reçoit également en entrée une valeur de commande ysel contrôlée par la variable EN de manière à traiter le cas de la bordure de l'image de la même façon que pour le premier multiplexeur xmux.

L'additionneur add effectue la somme des valeurs délivrées par le premier et le deuxième multiplexeur xmux et ymux, de manière à former l'adresse du pixel à délivrer en sortie.

Cette adresse va permettre au moyen de détermination MD d'aller pointer sur le pixel désigné par l'adresse xyout stockée dans une mémoire (non représentée) associé au dispositif DIS.

Une autre solution pour réaliser les deux sous-images virtuelles, consisterait à utiliser deux masques à l'aide de deux filtres qui occulteraient un pixel sur deux de l'image numérique incidente.

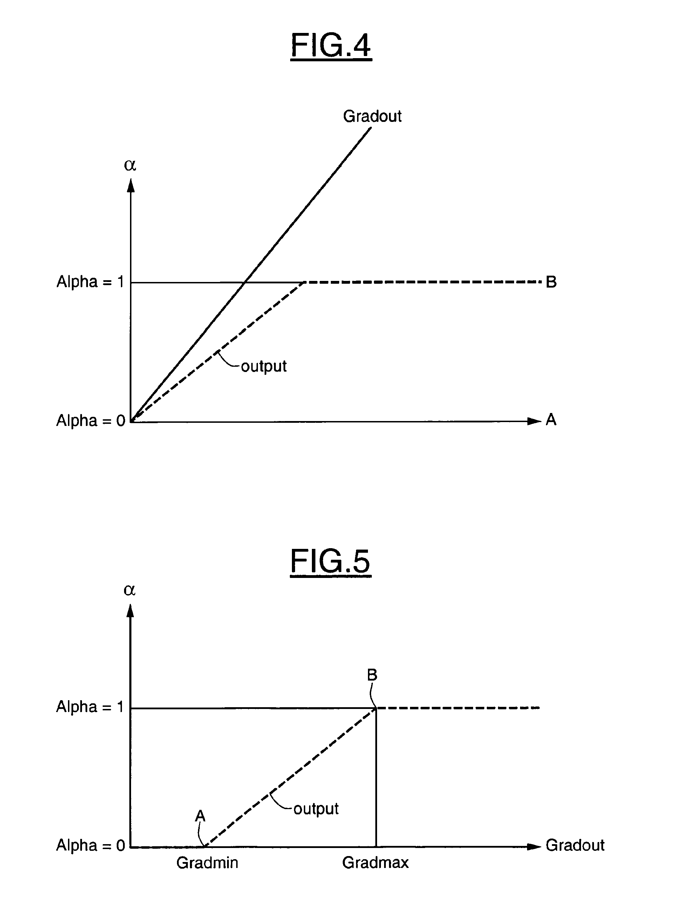

On se réfère à présent à la figure 4, qui décrit plus précisément la variation de l'information de substitution permettant le remplacement ou non du pixel considéré par le pixel de substitution.

La courbe de la figure 4 représente l'évolution de la variable de sortie OUT du mélangeur MEL en fonction des valeurs prises par α qui varie linéairement par rapport à Gradout.

Dans une variante, on pourrait considérer des courbes de l'information de substitution α fonction de Gradout qui ne soient pas linéaires.

Si l'information A contient un pixel décalé, susceptible de remplacer un pixel considéré de l'image numérique incidente, et que l'information de substitution α est égale à 0, alors la substitution est autorisée et le pixel délivré en sortie pour former l'image numérique finale est égal au pixel décalé.

Dans le cas où α est compris entre 0 et 1, le pixel délivré par le mélangeur est égal à une somme pondérée par α du pixel contenu dans l'information A et du pixel contenu dans l'information B.

Enfin, dans le cas où α est égal à 1, la substitution est alors interdite et l'on conserve le pixel considéré de l'image numérique incidente. Le pixel délivré en sortie est alors égal au pixel contenu dans l'information B.

L'exemple représenté sur la figure 4 correspond à un cas idéal. En pratique, comme illustré sur la figure 5, il existe des seuils, respectivement un premier seuil Gradmin et un deuxième seuil Gradmax. Si Gradout est inférieur à Gradmin, alors on remplace le pixel considéré de l'image numérique incidente par le pixel décalé déterminé par les moyens de détermination MD.

Si Gradout est supérieur au seuil Gradmax, on conserve alors pour élaborer l'image numérique finale INF, le pixel initial de l'image numérique incidente INI.

Si Gradout est compris entre ces deux seuils, alors le pixel de l'image numérique finale INF est égal à la somme pondérée du pixel considéré de l'image numérique incidente et du pixel décalé correspondant au pixel considéré.

Dans le cas où la permutation n'est pas autorisée, parce qu'on se trouve par exemple en bordure de l'image, les informations A et B désignent le même pixel et la valeur de l'information de substitution α est alors indifférente.

Par ailleurs, on peut contrôler la valeur des seuils de gradients Gradmin et Gradmax en fonction des paramètres des décodeurs utilisés, si cela est possible.

**Revendications**

1. Procédé de réduction des artéfacts d'une image numérique incidente (INI) comportant des pixels véhiculant des informations, **caractérisé par le fait qu'**il comprend la détermination pour certains pixels considérés de l'image de pixels décalés, un pixel décalé associé à un pixel considéré étant situé à un emplacement décalé par rapport à l'emplacement dudit pixel considéré, la détermination d'une information de substitution (α) prenant en compte les variations entre chaque information véhiculée par des pixels situés à des emplacements adjacents dudit pixel considéré, et le remplacement ou non dudit pixel considéré par un pixel de substitution égal au pixel décalé ou à une combinaison du pixel décalé et du pixel considéré, en fonction de la valeur de ladite information de substitution (α).

2. Procédé selon la revendication 1, **caractérisé par le fait que** l'examen du remplacement éventuel du pixel considéré comprend la comparaison de ladite information de substitution à un premier et deuxième seuils, et **par le fait que** l'on conserve le pixel considéré si le résultat de la comparaison est supérieure ou égal au premier seuil (Gradmax) et on remplace le pixel considéré par le pixel de substitution si le résultat de la comparaison est inférieure au premier seuil (Gradmax), et **par le fait que** la nature du pixel de substitution dépend du résultat de ladite comparaison aux deuxième seuil (Gradmin).

3. Procédé selon la revendication 2, **caractérisé par le fait que** le pixel de substitution est égal au pixel décalé si l'information de substitution (α) est inférieure au deuxième seuil (Gradmin), et est égal à une somme pondérée du pixel considéré et du pixel décalé si l'information de substitution (α) est supérieure au deuxième seuil (Gradmin).

4. Procédé selon la revendication 3, **caractérisé par le fait que** chaque emplacement décalé est décalé de l'emplacement correspondant du pixel considéré, d'un décalage correspondant à un déplacement selon deux axes orthogonaux de l'image respectivement d'amplitudes n et m, au moins l'une des amplitudes m ou n étant non nulle.

5. Procédé selon la revendication 4, **caractérisé par le fait que** la détermination de l'information de substitution (α) relative à un pixel considéré comprend
un filtrage des informations véhiculées par les pixels situés aux emplacements adjacents du pixel considéré,
la sommation des informations filtrées.

**6.** Procédé selon l'une quelconque des revendications 4 ou 5, **caractérisé par le fait que** l'on détermine des pixels décalés pour un pixel sur deux de l'image incidente (INI), et **par le fait que** la somme des amplitudes selon les deux axes orthogonaux du déplacement est paire.

**7.** Dispositif de réduction des artéfacts d'une image numérique incidente (INI) composée de pixels véhiculant des informations, **caractérisé par le fait qu'**il comprend des moyens de détermination (MD) aptes à déterminer pour certains pixels considérés de l'image des pixels décalés, un pixel décalé associé à un pixel considéré étant situé à un emplacement décalé par rapport à l'emplacement dudit pixel considéré, des moyens de calcul (MC) aptes à déterminer une information de substitution ($\alpha$) prenant en compte les variations entre chaque information véhiculée par des pixels situés à des emplacements adjacents dudit pixel considéré, et un moyen de substitution (MEL) apte à remplacer ou non le pixel considéré par un pixel de substitution égal au pixel décalé ou à une combinaison du pixel décalé et du pixel considéré, en fonction de la valeur de ladite information de substitution.

**8.** Dispositif selon la revendication 7, **caractérisé par le fait qu'**il comprend une mémoire pour stocker les pixels de l'image incidente (INI), et **par le fait que** les moyens de détermination (MD) comprennent des moyens d'adressage (xmux, ymux) de ladite mémoire apte à délivrer une première adresse correspondant à l'emplacement du pixel considéré et une deuxième adresse correspondant à l'emplacement décalé du pixel décalé associé audit pixel considéré de telle sorte que chaque emplacement décalé est décalé de l'emplacement correspondant du pixel considéré, d'un décalage correspondant à un déplacement selon deux axes orthogonaux de l'image respectivement d'amplitudes n et m, au moins l'une des amplitudes m ou n étant non nulle.

**9.** Dispositif selon la revendication 8, **caractérisé par le fait que** l'ensemble des premières adresses correspond à un pixel sur deux de l'image incidente (INI), et **par le fait que** la somme des amplitudes selon les deux axes orthogonaux du déplacement est paire.

**10.** Dispositif selon l'une quelconque des revendications 8 à 9, **caractérisé par le fait que** les moyens d'adressage comprennent
une première paire de compteurs affectés à un axe de l'image et mutuellement décalés en fonction dudit emplacement selon cet axe,
une deuxième paire de compteurs affectés à l'autre axe de l'image et mutuellement décalés en fonction dudit déplacement selon cet autre axe,
un premier multiplexeur dont les deux entrées sont connectées respectivement à la première paire de compteurs,
un deuxième multiplexeur dont les deux entrées sont connectées respectivement à la deuxième paire de compteurs,
un additionneur connecté aux sorties des deux multiplexeurs, et délivrant en sortie une adresse de pointage de la mémoire.

**11.** Dispositif selon l'une quelconque des revendications 8 à 10, **caractérisé par le fait que** les moyens de calcul (MC) comprennent
des moyens aptes à filtrer des informations véhiculées par les pixels situés aux emplacements adjacents du pixel considéré
des moyens de sommation aptes à sommer des informations de filtrage, lesdits moyens de sommation délivrant ladite information de substitution ($\alpha$).

**12.** Dispositif selon l'une quelconque des revendications 8 à 11, **caractérisé par le fait que** le moyen de substitution comprend
des moyens de comparaison aptes à comparer l'information de substitution ($\alpha$) à un premier (Gradmax) et un deuxième seuil (Gradmin), et
un moyen de mélange (MEL) recevant le pixel de l'image incidente (INI) et le pixel décalé éventuel correspondant, et délivrant le pixel incident considéré ou le pixel de substitution de ce pixel incident en fonction du résultat des moyens de comparaison.

**13.** Système format écran, **caractérisé par le fait qu'**il comprend un écran par exemple un écran Plasma, destiné à afficher une image numérique et un dispositif (DIS) selon l'une quelconque des revendications 7 à 12.

FIG.1

Etape 1          Etape 2          Etape 3          FIG.2

# FIG.3

# FIG.4

# FIG.5

**Office européen**
**des brevets**

**RAPPORT DE RECHERCHE EUROPEENNE**

Numéro de la demande

EP 05 29 2765

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SAMADANI R ET AL: "Deringing and deblocking dct compression artifacts with efficient shifted transforms" IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 3, 24 octobre 2004 (2004-10-24), pages 1799-1802, XP010786112 ISBN: 0-7803-8554-3 | 1,7,8, 11,13 | INV. H04N7/26 H04N7/26 |
| Y A | Section 2., pages 1799-1801 | 2,12 3-6,9,10 | |
| A | NOSRATINIA A ED - WONG P W ET AL: "Denoising JPEG images by re-application of JPEG" MULTIMEDIA SIGNAL PROCESSING, 1998 IEEE SECOND WORKSHOP ON REDONDO BEACH, CA, USA 7-9 DEC. 1998, PISCATAWAY, NJ, USA,IEEE, US, 7 décembre 1998 (1998-12-07), pages 611-615, XP010318366 ISBN: 0-7803-4919-9 * abrégé * Sections "Introduction" et "JPEG Denoising through JPEG", pages 611-613 | 1-13 | DOMAINES TECHNIQUES RECHERCHES (IPC) H04N G06T |

-----

-----

-/--

Le présent rapport a été établi pour toutes les revendications

| Lieu de la recherche | Date d'achèvement de la recherche | Examinateur |
|---|---|---|
| La Haye | 7 avril 2006 | Colesanti, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**Office européen des brevets**

## RAPPORT DE RECHERCHE EUROPEENNE

Numéro de la demande

EP 05 29 2765

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DERVIAUX C ET AL: "Blocking artifact reduction of DCT coded image sequences using a visually adaptive postprocessing" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 septembre 1996 (1996-09-16), pages 5-8, XP010202580 ISBN: 0-7803-3259-8 | 2,12 | |
| A | Section 2.2, pages 6-7 | 1,3-11, 13 | |
| | Section 2.1.2, page 6 * abrégé * ----- | | |
| A | ZHAO Y ET AL: "Postprocessing technique for blocking artifacts reduction in DCT domain" ELECTRONICS LETTERS, IEE STEVENAGE, GB, vol. 40, no. 19, 16 septembre 2004 (2004-09-16), pages 1175-1176, XP006022670 ISSN: 0013-5194 * le document en entier * ----- | 1-13 | |
| | -/-- | | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 7 avril 2006 | Colesanti, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 05 29 2765

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WEBB J L H ED - INSTITUTE OF ELECTRICAL AND ELECTRONICS ENGINEERS: "Postprocessing to reduce blocking artifacts for low bit-rate video coding using chrominance information" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 septembre 1996 (1996-09-16), pages 9-12, XP010202581 ISBN: 0-7803-3259-8 Section 3, pages 10-11 ----- | 1-13 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 7 avril 2006 | Colesanti, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................

& : membre de la même famille, document correspondant

EPO FORM 1503 03.82 (P04C02)